# EUROPEAN PATENT APPLICATION

(11) **EP 4 429 293 A1**
(43) Date of publication of application: **11.09.2024**
(21) Application number: 23020109.7
(22) Date of filing: 07.03.2023
(51) Int. Cl.: H04W 8/20, H04W 4/50, H04W 12/42

(54) **PROFILE PROVISIONING FROM EUICC PRODUCTION MACHINE TO EUICC**

(71) Applicant: Giesecke+Devrient Mobile Security Germany GmbH, 81677 München (DE)
(72) Inventor: Schnellinger, Michael, 84032 Landshut (DE)
(74) Representative: Giesecke+Devrient IP

(57) **Abstract**

A method for provisioning a profile to an eUICC designed to be hosted in a mobile device, including the steps: S4 S0-1) Provide an eUICC production machine comprising or having connected thereto an eUICC read/write facility, and being installed in a secure production environment;
S0-2) Provide an IFPP Controller installed in said secure production environment;
S4-1) Provide dynamic profile data (EDP-P1) to said IFPP Controller;
S4-2) Provide the eUICC, with at least one already present created profile container (T_ISD-P[]) created from static profile data, at said eUICC production machine;
S4-3) By the IFPP Controller, provide the dynamic profile data (EDP-P1) to the eUICC production machine;
S4-4) By the eUICC production machine, download the dynamic profile data (EDP-P1) via the eUICC read/write facility to the eUICC, and write the dynamic profile data (EDP-P1) into the profile container (T_ISD-P[]), so as to install the profile and thereby provision the profile to the eUICC.

## Description

### Field of the invention

The present invention relates to profile provisioning to an eUICC designed to be hosted in a wireless network communication device, or briefly device.

### Background of the invention and prior art

The world is connected via wireless communication networks, also referred to as mobile communication networks, wherein devices hosting eUICCs communicate with each other and with wireless network background servers in a secured way. The eUICCs hosted in the devices comprise at least one or several subscription profiles, or briefly profiles, including profile data like an international mobile subscriber identity IMSI and an authentication key Ki, and a profile number ICCID, OTA keys, and further profile data. A profile hosted in the eUICC enables the device hosting the eUICC to communicate in the wireless communication network.

For eUICCs, several form factors are known, including plug-in SIM-card, embedded and soldered-in eUICC in a strict sense, and integrated iUICC integrated into a chip of a chipset of the device hosting the eUICC.

Devices are for example known as consumer wireless network communication devices like smartphones and network-able tablet PCs, and as M2M wireless network communication devices including automotive wireless network communication devices and industrial wireless network communication devices. In the following, a device is meant to be a wireless network communication device, hosting an eUICC including one or several profiles, and constructed to communicate with other devices or network servers over a mobile communication network, herein including the eUICC for security relevant tasks like authentication.

The documents [1] [SGP.22] GSMA SGP.22 RSP Technical Specification Version 2.2.2, 05 June 2020, and [2] [SGP.02] SGP.02 - Remote Provisioning Architecture for Embedded UICC Technical Specification, Version 4.2, 07 July 2020, describe procedures and architectures for provisioning profiles to eUlCCs hosted in devices. Document [3] [SGP.31] GSMA SGP.31 eSIM loT Architecture and Requirements Version 1.0, 19 April 2022, describes procedures and architectures for provisioning profiles to eUlCCs hosted in devices in an loT environment.

The provisioning of a profile to an eUICC includes authentication between the profile server and the eUICC, profile download and profile installation. Document [1] [SGP.22], chapter 3.1.2 describes the Common Mutual Authentication, and chapter 3.1.3 describes profile download and installation to an eUICC of a consumer device. Documents [2], [3] describe similar procedures for M2M and loT environments. The profile download architecture includes a profile provisioning server, SM-DP+ in the case of [1] [SGP.22] or [3], or SM-DP in the case of [2] [SGP.02], a Profile Assistant in the device or in the eUICC or both, and which can be a Local Profile Assistant LPA as in [1], [2], or an loT Profile Assistant IPA as in [3], and the eUICC. Profiles are downloaded from the profile provisioning server over the Profile Assistant (LPA or IPA) to the eUICC.

According to [1] [SGP.22] and [2] [SGP.02], profiles are downloaded from a profile provisioning server usually in a Bound Profile Package BPP including a considerable amount of data.

The profile installation sub-procedure includes several sub-steps. According to [1] [SGP.22], chapter 3.1.3.3 Sub-procedure Profile Installation, step [3] (Fig. 14 and subsequent description), first a profile container ISD-P is established and configured, and subsequently, steps [4], [5] and [6] (also Fig. 14 and subsequent description), metadata, replaced session keys and profile data elements are installed in the profile container ISD-P. The profile container ISD-P is created from static profile data. The profile data elements installed in the profile container ISD-P are, are part of or comprise dynamic profile data.

Common Mutual Authentication, profile download from a profile provisioning server to an eUICC and profile installation in the eUICC take a considerable amount of time, usually more than ten seconds.

The generation of a profile is out of the scope of the documents [1] [SGP.22] and [2] [SGP.02]. For generation of a profile, profile data including static profile data and dynamic data are provided on a data generation platform of a profile provider as a proprietary profile, which is an arrangement of the profile data in a proprietary data format of the profile provider. For profile download from a profile provisioning server to an eUICC, the profile is required to be provided in a non-proprietary, standardized interoperable format as described in the document [5] [PP IF] SIM Alliance eUICC Profile Package: Interoperable Format Technical Specification, Version 2.3, October 2019, which is also referred to as TCA compliant format, Trusted Connectivity Alliance compliant format, according to the renaming of SIM Alliance to Trusted Connectivity Alliance. Therefore, at the data generation platform, the proprietary profile is transformed into a TCA compliant profile, and the TCA compliant profile is provided from the data generation platform to a profile provisioning platform, for example an SM-DP+ or SM-DP, for download to an eUICC.

In-factory personalization or provisioning is a setup in which profiles are provisioned to an eUICC locally in a factory environment, contrary to the standard remote provisioning procedures envisaged in [1] [SGP.22], [2] [SGP.02] and [3] [SGP.31], where a profile is downloaded to an eUICC from a remote profile provisioning server.

In In-Factory Provisioning, a profile is downloaded to an eUICC, not from a remote profile provisioning server like SM-DP+, however instead from a local Personalization Equipment residing in a secure production environment. The secure production environment can be a secure production environment of an eUICC manufacturer who manufactures the eUICC, or of a semiconductor chip manufacturer who manufactured a semiconductor chip hosted in the eUICC, or of a device manufacturer who manufactured the device. Further, in In-Factory Provisioning the eUICC is not necessarily mounted to a device yet, however can be mounted to an eUICC reader coupled to or integrated to the Personalization Equipment. In this case, the eUICC is provisioned from the Personalization Equipment via the eUICC reader. The Personalization Equipment in turn can for example be part of a production machine for manufacturing eUICCs.

Profile generation in an In-Factory Provisioning setup can be performed at the eUICC manufacturer instead of at the profile provider, or alternatively at the profile provider as in the standard provisioning setup.

The document [4] DE102019001840B3 from the prior art discloses a method for profile provisioning to an eUICC, wherein a profile downloaded to an eUICC comprises empty places into which, after download, and upon profile installation to the eUICC, profile data from another profile which is already present in the eUICC are inserted.

The document [5] EP2802162A1 from the prior art discloses a method for provisioning a profile to an eUICC, wherein an empty profile template is created by execution of an executable file, and profile data are loaded into the profile template.

The device manufacturers, including M2M device manufacturers and smartphone manufacturers, provisioning or having provisioned their devices, especially when provisioning in In-Factory Provisioning, request lower processing times for profile provisioning to eUICCs, below 10 seconds per provisioning of one profile.

With the full cycle of authentication, profile download and profile installation according to [1] [SGP.22] such low processing times for profile provisioning cannot be achieved.

Sometimes, profiles provided outside an eUICC, on a platform or server, are referred to as virtual profiles, whereas a profile installed in an eUICC is referred to simply as a profile.

### Objective of the invention

It is an object of the present invention to provide a method for provisioning a profile to an eUICC having a decreased processing time for the profile provisioning.

Particularly, a provisioning solution shall be provided suitable to make In-Factory Provisioning more efficient and less prone to errors.

### Summary of the invention

The object of the invention is achieved by method with the following features, according to claim 1. Embodiments of the invention are presented in dependent claims.

The basic idea underlying the present invention is to split off preparative steps of profile provisioning and execute the split-off steps separately, so as to reduce the required processing time during actual profile provisioning.

Especially, the creation of a profile container, e.g. an ISD-P, in the eUICC is split off, and can be performed when time is available.

Later, during profile provisioning, only the profile data need to be provisioned into the already present profile container.

Particularly, according to the present invention, an eUICC is provided at an eUICC production machine, with at least one profile container created from static profile data being already present in the eUICC, however the eUICC lacking in the profile container at least some - or all - dynamic profile data required for an operational profile.

An In Factory Profile Provisioning Controller, IFPP Controller, which has the ability to handle dynamic profile data of a profile separated from the static profile data of the profile writes only the dynamic profile data into the prepared profile container.

Correspondingly, the processing time for profile provisioning at the production machine is reduced, since downloading and implementing items for creating the profile container was executed earlier already.

The method is particularly useful and applicable for In-Factory Personalization making use of such an eUICC production machine.

The dynamic profile data can in particular be retrieved from a ready generated profile by an IFPP Dynamic Converter, as is described in a different patent application, and be provided from the IFPP Dynamic Converter to the IFPP Controller.

In greater detail, the presented method for provisioning a profile to an eUICC designed to be hosted in a device includes the steps:
S0-1) Provide an eUICC production machine comprising or having connected thereto an eUICC read/write facility, and being installed in a secure production environment;
S0-2) Provide an IFPP Controller installed in said secure production environment; S4-1) Provide dynamic profile data to said IFPP Controller;
S4-2) Provide the eUICC, with at least one already present created profile container created from static profile data, at said eUICC production machine;
S4-3) By the IFPP Controller, provide the dynamic profile data to the eUICC production machine;
S4-4) By the eUICC production machine, download the dynamic profile data (EDP-P1) via the eUICC read/write facility to the eUICC, and write the dynamic profile data into the profile container, so as to install the profile and thereby provision the profile to the eUICC.

According to the present invention, while the eUICC occupies the eUICC production machine, only the dynamic profile data are required to be provisioned into the already present profile container. Thereby, the time span during which the eUICC occupies the eUICC production machine for profile provisioning is considerably reduced as compared to the traditional provisioning of an entire profile in one single step. Therefore, in an IFPP eUICC production environment where machine occupancy time is valuable, the present solution provides large advantages. In addition, the lower amount of data to be transferred from the eUICC production machine to the eUICC can help to reduce risks of data transfer errors. Accordingly, the present provisioning solution is suitable to make In-Factory Provisioning more efficient and less prone to errors.

The eUICC is designed to be hosted in a device, and preferably not yet hosted in the device. According to some use case scenarios an eUICC designed to be hosted in a device can be already hosted in the device and be provided at the production machine together with the device, instead of the eUICC alone.

According to some embodiments, step S4-3) further comprises: By the IFPP Controller, retrieve from the production machine eUICC information, such as EID, on an eUICC to which dynamic profile data shall be provisioned and/or MNO or MVNO information on an MNO or MVNO owning the dynamic profile data, and select, from several sets of dynamic profile data from several profiles, a matching set of dynamic profile data matching with the retrieved eUICC information, for example EID, and / or MNO or MVNO information.

According to some embodiments, before the dynamic profile data are provided to the eUICC, the IFPP Controller further sends the dynamic profile data to an HSM for encrypting, the HSM encrypts the dynamic profile data with a profile encryption key and sends the encrypted dynamic profile data to the IFPP Controller, and the IFPP Controller receives from the HSM the encrypted dynamic profile data, and, in step S4-3), provides the encrypted dynamic profile data to the eUICC production machine.

According to some further developed embodiments of the above described embodiment, the dynamic profile data provided in step S4-1) are encrypted with a transport key, and along with the encrypted dynamic profile data, a reference to the transport key is sent in step S4-1), wherein, in the HSM, the encrypted dynamic profile data is/are decrypted with the referenced transport key, and is/are re-encrypted in the HSM with the profile encryption key.

According to some further developed embodiments of the above described embodiments, the profile encryption is specific to the eUICC or/and specific to the mobile device, wherein profile encryption specific to the eUICC is achieved by an encryption algorithm processing an eUICC identifier, particularly EID, as an input to the encryption algorithm.

According to some embodiments, the eUICC provided in step S4-2) is provided with two or more already present created profile containers created from static profile data of different profiles, wherein step S4-3) further comprises: select the correct profile container corresponding to the dynamic profile data provided in step S4-1).

According to some embodiments, in steps S4-1 and S4-3), a profile identifier is provided along with the provided dynamic profile data, and the profile identifier is also provided along with the correct already present created profile container, and the correct profile container is selected based on the provided profile identifier.

According to some embodiments, the a profile identifier is or comprises: a profile container identifier, ISD-P AID; or a profile number, ICCID; or a profile name; or a combination of one or several or all of a profile container identifier, ISD-P AID a profile number, ICCID, and a profile name.

According to some embodiments, the dynamic profile data are extracted from an already generated, ready-made profile.

According to some embodiments, the dynamic profile data comprise one or several or all of the following:
- International Mobile Subscriber Identity IMSI;
- Authentication Key Ki;
- Further Authentication parameters (OP(c))
- Profile number ICCID;
- Access Control Conditions ACC;
- one or several Personal Identification Number PIN;
- one or several Personal Unblocking Keys, PUKs;
- Default-Issuer-Security-Domain-Profile, Default-ISD-P;
- other dynamic parameters for the MNO or MVNO, including Roaming Partners.

According to some embodiments, the secure production environment in which the eUICC production machine is installed is a secure production environment of a device manufacturer.

The method may further comprise, previous to step S4-2), creating a profile container, and to this end perform steps:
S3-0) Provide, for at least one profile, static profile data being designed to create a profile container in an eUICC, to the eUICC;
S3-1) Create, in the eUICC at least one profile container.

According to some embodiments of profile container creating, the steps S3-0) and S3-1) are performed at an eUICC manufacturer, and after performing steps S3-0) and S3-1) are performed at the eUICC manufacturer, the eUICC is forwarded from the eUICC manufacturer to the secure production environment, particularly secure production environment of a device manufacturer. According to these embodiments, the profile container is created in the eUICC at the eUICC manufacturer, without yet inserting profile data into the profile container, or at least not yet inserting all required profile data. Then the eUICC is transported from the eUICC manufacturer to a device manufacturer. The device manufacturer from the eUICC manufacturer receives the eUICC and provides the eUICC to a secure production environment of its own (of the device manufacturer). In the secure production environment, the device manufacturer implants or implements the eUICC into a device. In addition, also in the secure production environment, the device manufacturer loads and stores profile data into the already pre-installed profile container. Thus, at the device manufacturer, the download and install time duration for downloading and installing (storing) the profile data, during the secure production environment is kept occupied, can be kept low.

According to some embodiments of profile container creating,
in step S3-0), the static profile data are provided to the eUICC along with an operating system of the eUICC;
step S3-0) further comprises installing the operating system to the eUICC.

In a comparable traditional profile provisioning setup, only the operating system would be provided to the eUICC at the eUICC manufacturer. At the device manufacturer the entire profile would be downloaded in the secure production environment, by downloading static profile data and creating a profile container, and then downloading and storing to the created profile container dynamic profile data.

According to some embodiments: the dynamic profile data being designed to be combined with the static profile data; the static profile data being designed to create a profile container in an eUICC; the dynamic profile data being designed to install a profile in a created profile container.

### Brief description of the drawings

Embodiments of the invention will now be described with reference to the accompanying drawings, throughout which like parts are referred to by like references, and in which represents:
- Fig. 1: A profile provisioning setup comprising an IFPP Dynamic Converter, suited to be combined with the embodiment of Fig. 2;
- Fig. 2: A profile provisioning setup comprising an IFPP Controller, according to an embodiment of the invention.

### Detailed description of the invention

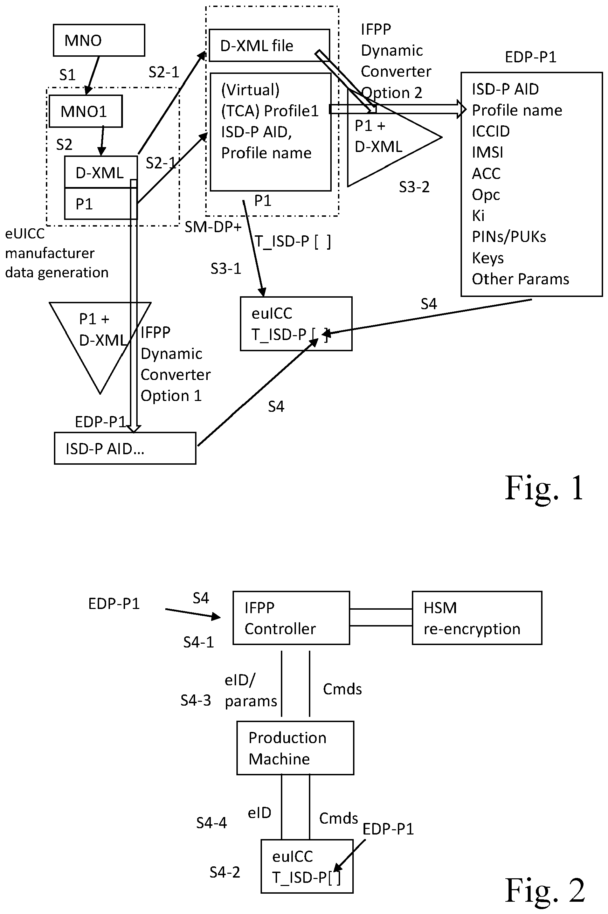

Fig. 1 shows a profile provisioning setup comprising an IFPP Dynamic Converter, suited to be combined with the embodiment of the invention of Fig. 2. The optional steps shown in Fig. 1 are preferably performed previously to the steps of the present invention, for which an embodiment is shown in Fig. 2.

According to Fig. 1, a wireless network operator, often also referred to as Mobile Network Operator, MNO, provides, in a first step S1), profile generation data MNO1, including static profile data for generating a profile container T _ISD-P[] and dynamic profile data EDP-P1 to a data generation platform. The data generation platform is a server or computer able to process the profile data so as to generate a profile. The data generation platform is provided at an eUICC manufacturer, can however alternatively be provided at a profile provider. In a step S2), from the first profile generation data MNO1, including the static profile data for generating a profile container, ISD-P, and the dynamic profile data, a first profile P1 is generated. The first profile P1 can in its current state also be named a virtual profile P1, since currently it is provided on a server, the data generation platform, and not yet installed to an eUICC. Further, there is generated a dynamic-data description file D-XML indicating content and storage location of at least the dynamic profile data in the first profile P1. The wireless network operator MNO also provides of further sets of profile data similar to the first profile data MNO1, for example of second profile data MNO2, from which a second profile P2 can be generated (not further described here).

In embodiments with an IFPP Converter provided at a profile provisioning server SM-DP+, a step S2-1) is executed, wherein the generated profile P1 and the generated dynamic-data description file D-XML are provided to the profile provisioning server SM-DP+. Also on the SM-DP+, the profile P1 can also be named a virtual profile P1, not yet being installed to an eUICC.

In a further step S3-1) in the eUICC, at least one profile container T_ISD-P[] is created from the static profile data of the first profile data MNO1.

In a further step S3-2), the generated first profile P1 and the dynamic-data description file D-XML of the first profile P1 is provided to an IFPP Dynamic Converter. At the IFPP Dynamic Converter, with support of the dynamic-data description file D-XML, the dynamic profile data EDP-P1 are extracted from the first profile P1. Profile data MNOi for further profiles Pi may be present (not shown).

According to a first option 1, the IFPP Dynamic Converter is provided in or connected to the data generation platform, particularly at the eUICC manufacturer.

According to a second option 2, the IFPP Dynamic Converter is provided in or connected to the profile provisioning server SM-DP+, to which, in step S2-1) the generated profile P1 and the generated dynamic-data description file D-XML are provided.

In a later step S4, the extracted dynamic profile data EDP-P1 are transferred to the eUICC, to be installed into the profile container T_ISD-P[] created in step S3-1.

In the embodiment of Fig. 1, the dynamic profile EDP-P1 data of the first profile P1 comprise the following: a profile container identifier ISD-P AID of the profile container T_ISD-P[] that is created in step S3-1, a profile name, an ICCID (profile number), an IMSI (subscriber identity), ACC, Opc, Authentication key Ki, PINs and PUKs, Keys, and possibly further parameters.

Fig. 2 shows a profile provisioning setup comprising an IFPP Controller in a production environment, according to an embodiment of the invention.

According to the embodiment of Fig. 2, in a step S4, dynamic profile data EDP-P1 are transferred from an IFPP Controller to the eUICC, and installed into the profile container T_ISD-P[] created in step S3-1. If combined with the embodiment of Fig. 1, the dynamic profile data EDP-P1 are extracted profile data extracted from a profile P1 as described in relation to Fig. 1. The present invention can, however, also be effected with dynamic data provided by some other method.

In detail, step S4 comprises to:
S4-1) Provide the dynamic profile data EDP-P1 (which may be, but not necessarily are, extracted profile data extracted in step S3-2) above) to an IFPP Controller installed in an eUICC production environment;
herein, the dynamic profile data EDP-P1 can be encrypted with a transport key, and be sent to an HSM, be re-encrypted in the HSM with an eUICC specific key, and be sent back to the IFPP Controller;
S4-2) Provide the eUICC with the created profile container T_ISD-P[] at an eUICC read/write facility connected to or integrated into an eUICC production machine installed in said eUICC production environment;
S4-3) By the IFPP Controller, provide the dynamic profile data EDP-P1 to the eUICC production machine;
S4-4) By the eUICC production machine, download the dynamic profile data EDP-P1 to the eUICC, and write the transferred dynamic profile data EDP-P1 into the profile container T_ISD-P[] created in step S3-1), so as to create and thereby provision the profile to the eUICC.

### Cited documents

[1] [SGP.22] GSMA SGP.22 RSP Technical Specification Version 2.2.2, 05 June 2020
[2] [SGP.02] SGP.02 - Remote Provisioning Architecture for Embedded UICC Technical Specification, Version 4.2, 07 July 2020
[3] [SGP.31] GSMA SGP.31 eSIM loT Architecture and Requirements Version 1.0, 19 April 2022
[4] DE102019001840B3

## Claims

1. A method for provisioning a profile to an eUICC designed to be hosted in a device, including the steps:
S0-1) Provide an eUICC production machine comprising or having connected thereto an eUICC read/write facility, and being installed in a secure production environment;
S0-2) Provide an IFPP Controller installed in said secure production environment;
S4-1) Provide dynamic profile data (EDP-P1) to said IFPP Controller;
S4-2) Provide the eUICC, with at least one already present created profile container (T_ISD-P[]) created from static profile data, at said eUICC production machine;
S4-3) By the IFPP Controller, provide the dynamic profile data (EDP-P1) to the eUICC production machine;
S4-4) By the eUICC production machine, download the dynamic profile data (EDP-P1) via the eUICC read/write facility to the eUICC, and write the dynamic profile data (EDP-P1) into the profile container (T_ISD-P[]), so as to install the profile and thereby provision the profile to the eUICC.

2. The method according to claim 1, wherein step S4-3) further comprises: By the IFPP Controller, retrieve from the production machine eUICC information (EID) on an eUICC to which dynamic profile data (EDP-P1) shall be provisioned and/or MNO or MVNO information on an MNO or MVNO owning the dynamic profile data (EDP-P1), and select, from several sets of dynamic profile data from several profiles, a matching set of dynamic profile data (EDP-P1) matching with the retrieved eUICC information (EID) and/or MNO or MVNO information.

3. The method according to claim 1 or 2, wherein, before the dynamic profile data (EDP-P1) are provided to the eUICC, the IFPP Controller further sends the dynamic profile data (EDP-P1) to an HSM for encrypting, the HSM encrypts the dynamic profile data (EDP-P1) with a profile encryption key and sends the encrypted dynamic profile data (EDP-P1) to the IFPP Controller, and the IFPP Controller receives from the HSM the encrypted dynamic profile data (EDP-P1), and, in step S4-3), provides the encrypted dynamic profile data (EDP-P1) to the eUICC production machine.

4. The method according to claim 3, wherein the dynamic profile data (EDP-P1) provided in step S4-1) are encrypted with a transport key, and along with the encrypted dynamic profile data (EDP-P1), a reference to the transport key is sent in step S4-1), wherein, in the HSM, the encrypted dynamic profile data (EDP-P1) is decrypted with the referenced transport key, and is re-encrypted in the HSM with the profile encryption key.

5. The method according to claim 3 or 4, wherein the profile encryption is specific to the eUICC or/and specific to the mobile device, wherein profile encryption specific to the eUICC is achieved by an encryption algorithm processing an eUICC identifier, particularly EID, as an input to the encryption algorithm.

6. The method according to any of claims 1 to 5, wherein the eUICC provided in step S4-2) is provided with two or more already present created profile containers created from static profile data of different profiles, and wherein step S4-3) further comprises: select the correct profile container (T_ISD-P[]) corresponding to the dynamic profile data (EDP-P1) provided in step S4-1).

7. The method according to claim 6, wherein in steps S4-1 and S4-3), a profile identifier is provided along with the provided dynamic profile data (EDP-P1), and the profile identifier is also provided along with the correct already present created profile container (T_ISD-P[]), and wherein the correct profile container (T_ISD-P[]) is selected based on the provided profile identifier.

8. The method according to claim 7, wherein the a profile identifier is or comprises:
- a profile container identifier, ISD-P AID; or
- a profile number, ICCID; or
- a profile name; or
- a combination of one or several or all of a profile container identifier, ISD-P AID a profile number, ICCID, and a profile name.

9. The method according to any of claims 1 to 8, wherein the dynamic profile data (EDP-P1) are extracted from a generated profile.

10. The method according to any of claims 1 to 9, wherein the dynamic profile data (EDP-P1) comprise one or several or all of the following:
- International Mobile Subscriber Identity IMSI;
- Authentication Key Ki;
- Further Authentication parameters (OP(c))
- Profile number ICCID;
- Access Control Conditions ACC;
- one or several Personal Identification Number PIN;
- one or several Personal Unblocking Keys, PUKs;
- Default-Issuer-Security-Domain-Profile, Default-ISD-P;
- other dynamic parameters for the MNO or MVNO, including Roaming Partners.

11. The method according to any of claims 1 to 10, wherein the secure production environment in which the eUICC production machine is installed is a secure production environment of a device manufacturer.

12. The method according to any of claims 1 to 11, further comprising the step, previous to step S4-2):
S3-0) Provide, for at least one profile, static profile data being designed to create a profile container (T_ISD-P[]) in an eUICC, to the eUICC;
S3-1) Create, in the eUICC at least one profile container (T_ISD-P[]).

13. The method according to claim 12, wherein the steps S3-0) and S3-1) are performed at an eUICC manufacturer, and after performing steps S3-0) and S3-1) are performed at the eUICC manufacturer, the eUICC is forwarded from the eUICC manufacturer to the secure production environment, particularly secure production environment of a device manufacturer.

14. The method according to claim 12 or 13, wherein
in step S3-0), the static profile data are provided to the eUICC along with an operating system of the eUICC;
step S3-0) further comprises installing the operating system to the eUICC.

15. The method according to any of claims 1 to 14,
the dynamic profile data (EDP-P1) being designed to be combined with the static profile data;
the static profile data being designed to create a profile container (T_ISD-P[]) in an eUICC;
the dynamic profile data (EDP-P1) being designed to install a profile (P1) in a created profile container (T_ISD-P[]).
